# FASCICULE DE BREVET EUROPEEN

(11) **EP 1 529 683 B1**
(45) Date de publication et mention de la délivrance du brevet: **21.02.2007**
(21) Numéro de dépôt: 03300204.9
(22) Date de dépôt: 07.11.2003
(51) Int. Cl.: B60P 1/28, B65D 88/12, B62D 33/02

(54) **Benne obtenue par des tôles planes verticales et horizontales**
Fahrzeugmulde aus flachen senkrechten und waagerechten Blechen
Bucket formed by flat vertical and horizontal sheets

(43) Date de publication de la demande: 11.05.2005
(73) Titulaire: Guillaume, Thérèse, 06800 Cagnes sur Mer (FR); Guillaume, Martine, 06800 Cagnes-sur-Mer (FR)
(72) Inventeur: Guillaume, Bernard, 06800 Cagnes sur Mer (FR); Guillaume, Martine, 06800 Cagnes sur Mer (FR)
(74) Mandataire: Hautier, Jean-Louis

(56) Documents cités:
- EP-A- 0 179 962
- DE-A- 3 510 240
- DE-U- 29 604 009
- DE-U- 29 909 464
- FR-A- 2 814 995
- FR-A- 2 843 924
- FR-A- 2 845 343
- US-A- 1 627 336

## Description

L'invention a pour objet une benne selon le préambule de la revendication 1.

Une benne de ce type est définie dans EP-A-179962.

Actuellement, il existe des bennes à section sensiblement en U obtenue par des tôles planes soudées entre elles, lesdites tôles planes étant dans tous les cas renforcées par des traverses horizontales pour le fond de la caisse et verticales pour les parois latérales. Ces traverses présentent des inconvénients, elles marquent les tôles planes, augmentent le poids de la benne et à la fabrication, grèvent grandement le coût du fait des très nombreux points de soudure.

Chaque soudure, qui sont très nombreuses du fait de la présence des traverses, détériore la qualité du métal (aluminium ou acier). Dans l'invention, il y a moins de soudure car les soudures sont réduites au minimum donc la qualité du métal est préservé.

La réduction du nombre de soudure permet de gagner du poids sur la benne.

La fabrication étant simplifiée, il y a un grand gain de temps à la production de la benne.

La conception de cette benne permet d'obtenir un esthétique nouveau, la benne est lisse, les lignes sont simples et pures.

Le fond de la benne sans traverses est plus bas ce qui améliore la stabilité.

L'absence de traverses facilite l'entretien, notamment le lavage.

Du fait qu'il n'y a aucun pliage dans la fabrication de cette benne, il est possible d'utiliser un métal (acier ou aluminium) de très haute qualité.

L'état de la technique peut être défini par les brevets suivants :
- *EP-A-179.962: le document décrit un conteneur ou benne pour camion, notamment destiné au conditionnement, stockage, et transport des produits pulvérulents en vrac, ledit conteneur ou benne étant constitué de parois latérales concourantes, telles que les parois longitudinales et les plaques de fond définissant entre elles le volume de stockage, lesdites parois étant renforcées par des traverses, fixées sur les parois latérales, telles que des traverses-raidisseurs des parois longitudinales et*/*ou des traverses-renfort des plaques de fond, caractérisé par le fait qu'il comprend un ou plusieurs profilés d'assemblage, disposés au niveau des arêtes de concours de deux parois latérales adjacentes, présentant une âme, dont l'axe longitudinal correspond à ladite arête de concours, autour de laquelle sont réparties au moins : une première aile, dont le plan est sensiblement parallèle à celui de la première paroi latérale, sur laquelle se fixe cette dernière, une deuxième aile, solidaire de ladite première aile, dont le plan est sensiblement parallèle à celui de la deuxième paroi latérale, sur laquelle se fixe cette dernière, une troisième aile solidaire de ladite première aile, dont le plan est disposé transversalement par rapport à ladite première aile, lesdites première et seconde ailes présentant des moyens de positionnement des tôles constituant les parois latérales concourantes aptes à positionner les bords respectifs des tôles par rapport à l'arête de concours, lesdites première et troisième ailes constituant substantiellement des moyens de positionnement des traverses aptes à positionner les extrémités des traverses-raidisseurs et des traverses de renfort.*
- *FR-A-2.613.967 : le document concerne un procédé de montage automatisé de sous-ensembles de bennes (planchers et ridelles) et la machine pour la mise en oeuvre de ce procédé. Ce procédé est caractérisé en ce qu'il est mis en oeuvre par une machine effectuant les opérations principales suivantes :*
   *1. les éléments traverses, poutres et corbeaux sont d'abord positionnés automatiquement sur leur tôle support et pointes manuellement par soudure ;*
   *2. les éléments rives et longerons sont ensuite, manuellement ou automatiquement, positionnés par rapport aux éléments précédents, et pointes également manuellement par soudure.*
   *3. l'ensemble est enfin soudé automatiquement.*

*Cette machine fonctionne sous le contrôle par exemple d'un automate programmable possédant divers programmes adaptés aux différentes configurations.*

L'invention évite tous les inconvénients dus aux traverses et cités plus haut.

A cet effet, la benne pour porteurs ou semi-remorques selon l'invention a une section sensiblement rectangulaire, elle est obtenue par des tôles verticales et une tôle horizontale soudées entre elles.

La benne est à fond plat et repose directement sur les longerons du châssis ce qui est totalement innovant.

Une bande de caoutchouc est placée sur les longerons du châssis pour éviter le frottement entre les tôles.

Les tôles verticales sont soudées avec la tôle horizontale plane de fond; pour renforcer les liens avec les tôles planes verticales et la tôle horizontale plane de fond, un profilé ou équerre raidisseur est soudé entre l'extrémité inférieure intérieure de chaque tôle verticale et la bordure longitudinale de la tôle horizontale de fond.

Selon d'autres modes de réalisation, le fond de la benne peut être réalisée d'une ou plusieurs tôles planes soudées entre elles.

Chaque profilé ou équerre raidisseur a une forme en coupe sensiblement triangulaire avec un angle droit entre la tôle verticale correspondante et la tôle de fond.

Les extrémités supérieures des tôles latérales verticales sont pourvues chacune d'un profilé de rive qui fait office de raidisseur.

L'ensemble des tôles verticales formant les parois de la benne est lisse et libre de toutes traverses.

Sur la partie arrière de la benne, la paroi arrière est pourvu d'un profilé 13 qui fait office de cadre raidisseur et qui est soudé sur tout le pourtour arrière de la benne 5.

Cette benne peut ainsi travailler en élasticité sur toute la longueur et toute sa largeur.

Selon un mode de réalisation, la benne est constituée de tôles en aluminium ou acier.

La tôle de fond est d'environ 8 mm d'épaisseur, les tôles latérales constituant les parois verticales d'environ 4 mm.

Pour une benne dont les tôles sont réalisées en acier, les épaisseurs peuvent être de 7 mm pour la tôle de fond et 5 mm pour les tôles latérales.

La qualité de l'aluminium ou de l'acier qui est utilisée ne permet aucun pliage.

Ces matériaux sont très résistants aux chocs et à l'abrasion.

Les caractéristiques d'une telle benne selon l'invention permettent un gain de poids de 10 à 30 % au niveau de la benne.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue de côté d'une benne selon l'invention, vue en position de levage.

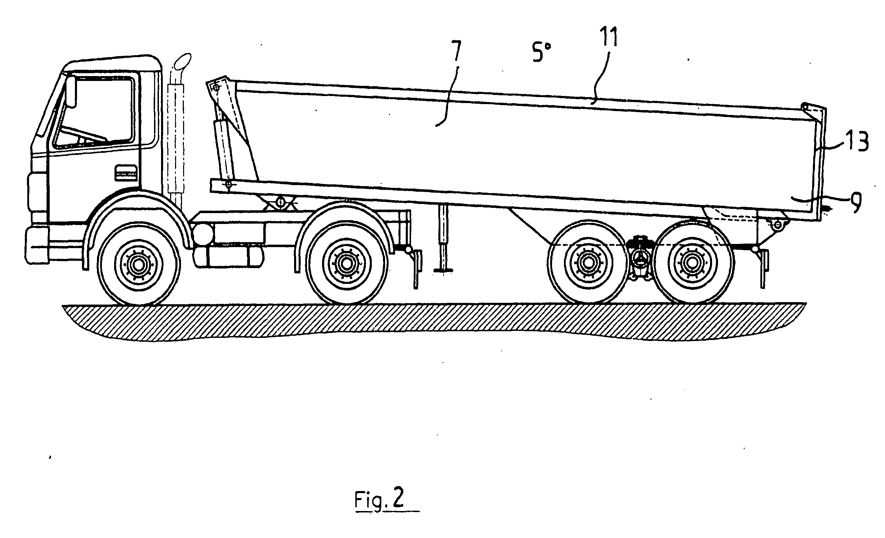

La figure 2 est une vue de côté d'une benne selon l'invention, vue en position benne abaissée.
La figure 3 est une vue de côté d'une benne avec traverses selon l'état de la technique.
La figure 4 est une vue en coupe d'une benne selon la figure 3, vue selon la coupe A-A.
La figure 5 est une vue de côté d'une benne selon l'invention.
La figure 6 est une vue en coupe de la benne représentée à la figure 5, vue en coupe selon l'axe B-B.

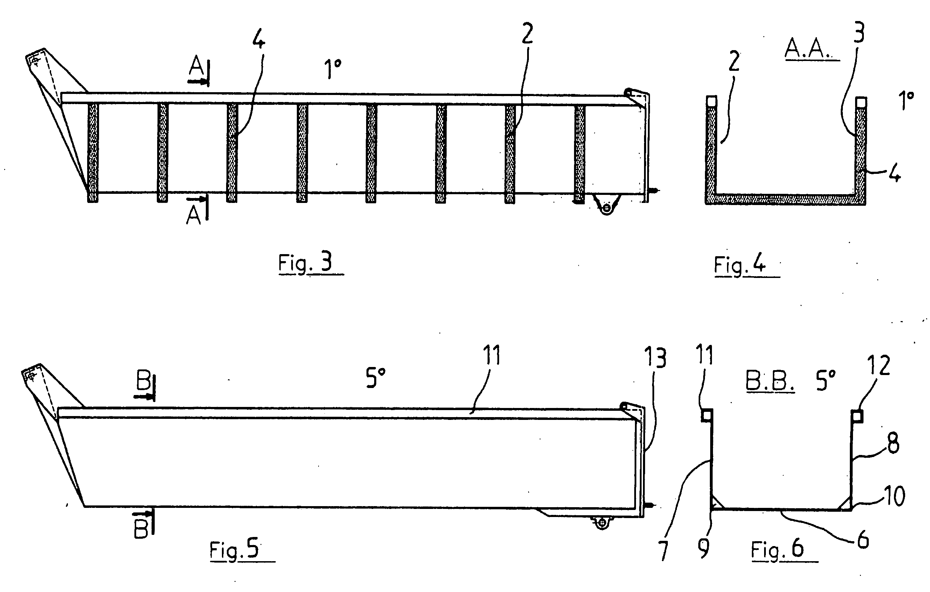

La benne 1 représentée dans les figures 3 et 4 est une benne 1 classique avec ses parois latérales 2 et 3, les parois latérales 2 et 3 sont renforcées par des traverses 4.

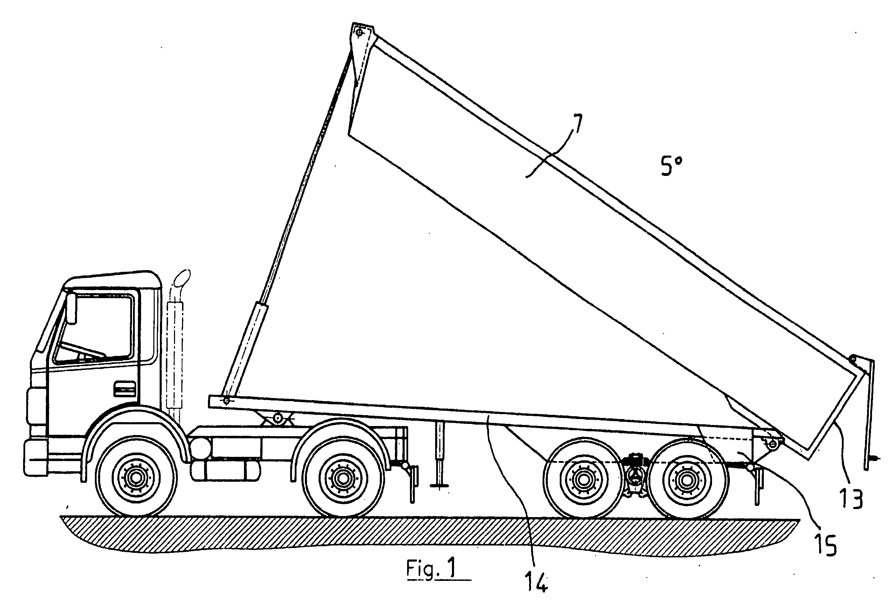

La benne 5 selon l'invention est composée d'une ou plusieurs tôles de fond 6, de tôles 7 et 8 verticales pour les parois latérales. La benne 5 est à fond plat et repose directement sur les longerons 14 du châssis 15 (figures 1 et 5).

Les tôles 7 et 8 verticales sont soudées à angle droit avec la bordure longitudinale de la tôle de fond 6.

Chaque tôle verticale 7, 8 est renforcée en liaison avec la tôle de fond 6 par un profilé ou équerre raidisseur 9, 10 qui est soudé entre l'extrémité inférieure intérieure de chaque tôle verticale 7, 8 et la bordure latérale de la tôle de fond 6.

Les extrémités supérieures des tôles latérales verticales 7, 8 sont pourvues chacune d'un profilé de rive 11, 12 qui fait office de raidisseur et qui est soudé sur toute sa longueur à la paroi latérale verticale 7, 8.

Sur la partie arrière de la benne, la paroi arrière est pourvu d'un profilé 13 qui fait office de cadre raidisseur et qui est soudé sur tout le pourtour arrière de la benne 5.

### REFERENCES

- 1.: Benne selon l'état de la technique
- 2,3.: Parois latérales
- 4.: Traverses
- 5.: Benne selon l'invention
- 6.: Tôle de fond
- 7,8.: Tôles verticales
- 9,10.: Profilé ou équerre raidisseur
- 11,12.: Profilé de rive
- 13.: Profilé cadre raidisseur du pourtour arrière de la benne
- 14.: Longerons du châssis
- 15.: Châssis

## Revendications

1. Benne pour porteurs ou semi-remorques obtenue par des tôles verticales (7, 8) et une tôle horizontales plane de fond (6) soudées entre elles à angle droit ; les tôles verticales (7, 8) sont soudées avec la tôle horizontale plane de fond (6); pour renforcer les liens avec les tôles planes verticales et la tôle horizontale plane de fond (6), un profilé ou équerre raidisseur (9, 10) est soudé entre l'extrémité inférieure intérieure de chaque tôle verticale (7, 8) et la bordure longitudinale de la tôle de fond (6),
chaque profilé ou équerre raidisseur (9, 10) ayant une forme en coupe sensiblement triangulaire avec un angle droit entre la tôle verticale correspondante (7, 8) et la tôle de fond (6) ; la benne **caractérisée par le fait**
**que** les extrémités supérieures des tôles latérales verticales (7, 8) sont pourvues chacune d'un profilé de rive (11, 12) qui fait office de raidisseur ;
**que** l'ensemble des tôles verticales (7, 8) formant les parois de la benne (5) est lisse et libre de toutes traverses ;
**que** sur la partie arrière de la benne, la paroi arrière est pourvu d'un profilé (13) qui fait office de cadre raidisseur et qui est soudé sur tout le pourtour arrière de la benne (5).

2. Benne pour porteurs ou semi-remorques selon la revendication 1 **caractérisée par le fait**
**que** la benne (5) est à fond plat libre de toutes traverses et qu'elle repose directement sur les longerons (14) du châssis (15).

3. Benne selon la revendication 1 **caractérisée par le fait qu'**une bande de caoutchouc est placée sur les longerons (14) du châssis (15) pour éviter les frottements entre les tôles.

## Claims

1. Skip for trucks or semitrailers formed by flat vertical sheets (7, 8) and a flat bottom horizontal sheet (6) welded together at right angles; vertical sheets (7, 8) are welded to the flat horizontal bottom sheet (6); a stiffening section or angle (9, 10) is welded between the lower inner end of each vertical sheet (7, 8) and the longitudinal edge of the bottom sheet (6) to reinforce the ties with the flat vertical sheets and flat bottom horizontal sheet (6),
each stiffening section or angle (9, 10) is roughly triangular in section with a right angle between corresponding vertical sheets (7, 8) and bottom sheet (6); the skip being **characterised in that**
the upper ends of the lateral vertical sheets (7, 8) are each equipped with an edge section (11, 12) which acts as a stiffener;
all vertical sheets (7, 8) forming the walls of skip (5) are smooth and free from any cross-members;
on the rear part of the skip, the wall is equipped with a section (13) which acts as stiffening frame and which is welded onto all the rear circumference of skip (5).

2. Skip for trucks or semitrailers according to claim 1 **characterised in that**
skip (5) has a flat bottom free from any cross-members and that it stands directly on side-members (14) of frame (15).

3. Skip according to claim 1 **characterised in that**
a rubber strip is placed on side-members (14) of frame (15) to avoid friction between the sheets.

## Patentansprüche

1. Fahrzeugmulde für Auflieger oder Sattelauflieger, gefertigt aus senkrechten Blechen (7, 8) und einem horizontalen Bodenblech (6), die miteinander rechtwinklig verschweißt sind, bei der
o die senkrechten Bleche (7,8) mit dem horizontalen, flachen Bodenblech (6) verschweißt sind,
o zur Verstärkung der Verbindungen der flachen senkrechten Bleche mit dem flachen horizontalen Bodenblech (6) ein Versteifungswinkel (9, 10) zwischen das untere Ende jedes senkrechten Blechs (7, 8) und den Längsrand des Bodenblechs (6) geschweißt wird,
o jedes Profil oder Versteifungswinkel (9, 10) im Querschnitt eine annähernd dreieckige Form hat mit einem rechten Winkel zwischen dem betreffenden senkrechten Blech (7, 8) und dem Bodenblech (6),
wobei die Fahrzeugmulde **dadurch gekennzeichnet ist, dass**
o die oberen Enden der senkrechten seitlichen Bleche (7, 8) jeweils mit einem Randprofil (11, 12) versehen sind, das als Versteifung dient,
o alle senkrechten Bleche (7, 8), welche die Wandungen der Fahrzeugmulde (5) bilden, glatt sind und keine Querstreben irgendwelcher Art aufweisen,
o die Rückwand im hinteren Teil der Fahrzeugmulde mit einem als Versteifungsrahmen dienenden Profil (13) versehen ist, das um den gesamten hinteren Umfang der Fahrzeugmulde (5) geschweißt ist.

2. Fahrzeugmulde für Auflieger oder Sattelauflieger gemäss Anspruch 1, **gekennzeichnet dadurch, dass** die Fahrzeugmulde (5) einen flachen Boden ohne Querstreben irgendwelcher Art hat und sie direkt auf den Längsträgern (14) des Chassis (15) aufliegt.

3. Fahrzeugmulde gemäss Anspruch 1, **gekennzeichnet dadurch, dass** ein Band aus Gummi auf die Längsträger (14) des Chassis (15) gelegt wird, um Reibungserscheinungen zwischen den Blechen auszuschließen.
